# EUROPÄISCHE PATENTANMELDUNG

(11) **EP 0 885 847 A1**
(43) Veröffentlichungstag der Anmeldung: **23.12.1998**
(21) Anmeldenummer: 98810362.8
(22) Anmeldetag: 24.04.1998
(51) Int. Cl.: C02F 1/28, C02F 1/72, C02F 1/74

(54) **Verfahren zur Behandlung von Abwasser**

(30) Priorität: 25.04.1997 CH 964/97; 18.11.1997 CH 2658/97
(71) Anmelder: Gschwind, Mireco, Dr., 4052 Basel (CH)
(72) Erfinder: Gschwind, Nikolaus, Dr., 4052 Basel (CH)
(74) Vertreter: Eder, Carl E.

(57) **Zusammenfassung**

Gegenstand der Erfindung ist ein katalytisches Verfahren zur Behandlung von verunreinigtem Wasser, das eine Elimination organischer Schadstoffe weit über das durch die Adsorptionskapazität des Katalysators mögliche Mass erlaubt und die biologische Abbaubarkeit des behandelten Wassers verbessert. Dies durch spezifische Elimination refraktärer organischer Wasserinhaltstoffe oder ihre Umwandlung in biologisch leichter abbaubare Zwischenstoffe. Eine besonders bevorzugte Anwendung der Erfindung betrifft hierbei die Vorbehandlung konzentrierter Abwässer aus Gewerbe und Industrie vor deren Einleitung in die Kanalisation. Diese Vorbehandlung kann technisch durch ein Katalysator-Festbett oder ein Katalysator-Fliessbett realisiert werden.

## Beschreibung

Die Erfindung betrifft ein Verfahren zur Behandlung von Abwasser. Das Verfahren ermöglicht insbesondere eine Elimination organischer Schadstoffe und eine Verbesserung der biologischen Abbaubarkeit von Wasserinhaltstoffen. Die verbesserte biologische Abbaubarkeit wird hierbei vorwiegend durch Umwandlung von refraktären Wasserinhaltstoffen in biologisch leichter abbaubare Zwischenstoffe erreicht.

Refraktäre organische Wasserinhaltstoffe sind nicht oder nur schwer biologisch abbaubar. Sie belasten die Umwelt in zunehmendem Masse und verursachen vermehrt Schwierigkeiten bei der Abwasserreinigung und Trinkwasseraufbereitung. Sie können darüber hinaus nur mit verhältnismässig teuren und energieintensiven Verfahren aus dem zu reinigenden Wasser entfernt werden. So zum Beispiel durch
- Adsorption an Aktivkohle,
- Oxidation mit Ozon oder Peroxid, eventuell kombiniert mit UV-Bestrahlung,
- Nassoxidation bei Temperaturen > 150°C,
- Umkehrosmose oder Ultrafiltration,
- Strippen, Verdampfen oder Extraktion.

Die Verwendung von Aktivkohle als Trägermaterial in Biofilmreaktoren ermöglicht eine höhere Umsatzleistung und den biologischen Abbau einer Substanz, die mit Anthrazit als Biofilmträger nicht abgebaut wird (W. Nishijima et al., Water Science and Technology 26, 2031-2034, 1992). Für die mit Aktivkohle verbesserte biologische Abbaubarkeit werden chemische Vorgänge verantwortlich gemacht, welche durch die Aktivkohle katalysiert sind (P. Koppe et al., Gesundheits-Ingenieur 95, 33-35 1974; N. Gschwind, gwf Wasser-Abwasser 133, 331-335, 1992).

Auch in Abwesenheit biologischer Aktivität werden Abbauvorgänge durch Aktivkohle katalysiert (Ch. Oehme und B. Höke, Industrieabwässer 6, 31-36, 1978; Ch. Egli et al., Arch. Microbiol. 152, 218-223, 1989; R. Vidic et al., Environ. Sci. Technol. 27, 2079-2085, 1993). Abiotische Umsetzungen von organischen Stoffen in Wasser werden aber auch durch mineralische Oberflächen katalysiert, so zum Beispiel die Umsetzung von CCl₄ mit H₂S durch Vermiculit (M.R. Kriegmann-King und M. Reinhard, Environ. Sci. Technol. 26, 2198-2206, 1992) und die Hydrolyse von Phenyl-Picolinat durch Anatas (TiO₂) und Geothit (FeOOH) (A. Torrents und A.T. Stone, Environm. Sci. Technol. 25, 143-149, 1991).

Voraussetzung für die Reaktion gelöster Stoffe auf festen Oberflächen ist ihre Adsorption. Dementsprechend zeigen alle als Katalysatoren in Frage kommenden festen Stoffe ein Adsorptionsvermögen und werden teilweise auch zur adsorptiven Elimination von Stoffen aus Abwasser eingesetzt. Dies gilt insbesondere für Aktivkohle (GB-A l 335 464), für γ-Aluminiumoxid (US-A 3 998 732) und für aktivierte Tone (US-A 4 255 276). Um adsorptive von katalytischen Effekten zu trennen, muss generell über längere Versuchszeiten gearbeitet werden. Das Arbeiten mit schlecht adsorbierenden Einzelstoffen (P. Koppe et al., Gesundheitsingenieur 95, 33 -35, 1974) oder die vorgängige adsorptive Sättigung (N. Gschwind, gwf Wasser-Abwasser 133, 331 - 335, 1992) können teilweise Abhilfe schaffen. Während die Adsorption flüssig-fest wenig von der Temperatur beeinflusst wird (Ulmann's Encyclopedia of Industrial Chemistry, Chapter B8, Buchholz et al.), laufen chemische Umsetzungen gemäss dem Gesetz von Arrhenius bei höherer Temperatur rascher ab.

Gegenstand der vorliegenden Erfindung ist ein katalytisches Verfahren gemäss Anspruch 1, nämlich ein Verfahren zur Vorbehandlung von Abwasser, welches im Anschluss an die Vorbehandlung einer - bevorzugt biologischen - Abwasserreinigungsanlage zugeführt wird. Das erfindungsgemässe Verfahren zeichnet sich insbesondere dadurch aus, dass es bei Temperaturen über 40°C eine Elimination organischer Schadstoffe weit über das durch die Adsorptionskapazität des Katalysators mögliche Mass sowie eine Verbesserung der biologischen Abbaubarkeit der Wasserinhaltstoffe erlaubt. Für die Verbesserung der biologischen Abbaubarkeit sind Umwandlungen organischer Stoffe erforderlich, wie sie durch adsorptive Mechanismen nicht erreicht werden können.

Eine besonders bevorzugte Anwendung der Erfindung betrifft die Vorbehandlung konzentrierter Abwässer aus Gewerbe und Industrie vor deren Einleitung in die Kanalisation und von dort in eine Abwasserreinigungsanlage. Diese Vorbehandlung kann technisch durch ein Katalysator-Festbett, oder ein Katalysator-Fliessbett realisiert werden. Für die erfindungsgemässe Behandlung des Abwassers dient vorzugsweise ein pulverförmiger, oder ein aus körnigem Material oder aus einem Granulat bestehender Katalysator mit einer spezifischen Oberfläche von mehr als 0,5 m²/g.

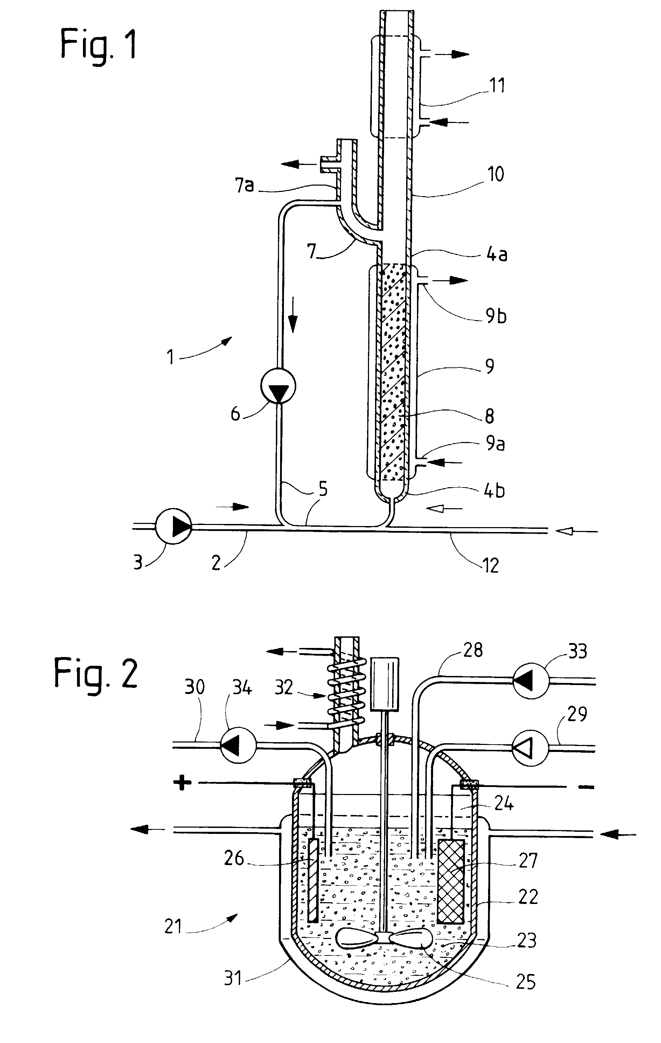

Nachfolgend wird die Erfindung anhand von vier Untersuchungs-Beispielen näher erläutert, wobei die drei ersten Untersuchungen in einer Anlage gemäss Figur 1 und die vierte Untersuchung in einer Anlage gemäss Figur 2 durchgeführt wurden. Die zum Teil sehr langen Versuchszeiten erklären sich aus der Notwendigkeit, adsorptive von katalytischen Effekten zu unterscheiden. Adsorptive Effekte sind für eine erhöhte DOC-Elimination während der ersten Versuchstage verantwortlich. Während die DOC-Elimination durch Adsorption mit der Versuchszeit abnimmt, bleibt die DOC-Elimination durch katalytische Umsetzungen nahezu konstant.

Die in der Figur 1 gezeigte und als ganzes mit 1 bezeichnete erste Versuchsanlage weist eine Abwasser-Zulaufleitung 2 mit einer Zulaufpumpe 3, einen Reaktor 4 und eine Abwasser-Umlaufleitung 5 mit einer Kreislaufpumpe 6 auf. Die Umlaufleitung 5 ist mit dem einen Ende an einem Leitungsstück 7 angeschlossen und mit dem Kopf 4a des säulenförmigen Reaktors 4 verbunden. Das Leitungsstück 7 weist seinerseits noch einen Überlauf 7a auf, durch den das behandelte Abwasser von der Anlage 1 abgeleitet wird. Das andere Ende der Umlaufleitung 5 mündet in den Sumpf 4b des Reaktors 4 und schliesst somit einen zur Umwälzung des zu behandelnden Abwassers dienenden Kreislauf. Die Pumpleistung der Kreislaufpumpe 6 beträgt ein Mehrfaches derjenigen der Zulaufpumpe 3, was zur Folge hat, dass beim Betrieb der Anlage 1 das in diese eingeleitete Abwasser mehrmals durch den Reaktor 4 geleitet wird, bevor es die Anlage 1 über den Überlauf 7a wieder verlässt. Erfindungsgemäss ist der einen Katalysator 8 enthaltende Reaktor 4 noch mit einem Heizmantel 9 versehen, der seinerseits einen Heisswassereinlauf 9a und einen Heisswasserauslauf 9b besitzt. Ferner mündet in die Kreislaufleitung 5 noch eine Zuleitung 12, mit welcher der Anlage 1 wahlweise Sauerstoff zugeführt werden kann.

Auf dem Kopf 4a des Reaktors 4 ist schliesslich noch ein Kühlturm 10 aufgesetzt, der mit einem Kühlwassermantel 11 versehen ist und im wesentlichen dazu dient, das während des Betriebes der Anlage 1 allenfalls fortlaufend verdampfende Wasser durch Abkühlung wieder zu verflüssigen und dem nachfolgend noch näher bezeichneten Abwasser-Kreislauf zurückzuführen.

Die in der Figur 2 gezeichnete Versuchsanlage ist als ganzes mit 21 bezeichnet und besteht im wesentlichen aus einem geschlossenen, doppelwandigen Reaktor 22. Dieser ist zur Aufnahme eines aus pulverförmigem Katalysator und Abwasser gebildeten "Slurry" 23 bestimmt und besitzt einen Innenraum 24 mit einem Rührwerk 25 und zwei Elektroden 26 und 27 zur elektrischen Behandlung des Abwassers, wobei letztere zum Beispiel aus einer Anode aus Graphit und einer gitterartigen Kathode aus rostfreiem Stahl gebildet werden. In den Innenraum 24 mündet eine Abwasser-Zulaufleitung 28 und eine Luft- oder Sauerstoff-Zufuhrleitung 29. Ein separater Abwasserablauf 30 ermöglicht schliesslich eine halb-kontinuierliche Behandlung des Abwassers, wie das nachfolgend anhand des Beispieles 4 näher erläutert wird.

Erfindungsgemäss ist auch der Reaktor 22 mit einem Heizmantel 31 und einem Kühlturm 32 versehen, um einerseits das behandelnde Abwasser auf beispielsweise 40 bis 100°C zu erwärmen und andererseits das während des Betriebes der Anlage 21 allenfalls fortlaufend verdampfende Wasser durch Abkühlung wieder zu verflüssigen und dem "Slurry" 23 zurückzuführen.

### Beispiel 1

Es wurde mit dem Sickerwasser aus einer Industriemülldeponie gearbeitet, welches von seiner Zusammensetzung und seiner biologischen Abbaubarkeit her gesehen mit einem gemischten Abwasser aus chemischen Produktionsprozessen verglichen werden kann (siehe auch N. Gschwind, gwf Wasser-Abwasser 133, 331- 335, 1992). Dieses Abwasser wurde in der vorstehend beschriebenen Versuchsanlage 1 mit Aktivkohle als Katalysator behandelt, und zwar während insgesamt 105 Versuchstagen bei Temperaturen zwischen 70 und 95°C. Die Konzentration an DOC (Dissolved Organic Carbon) im Zulauf zur Versuchsanlage lag während dieser Zeitspanne zwischen 1'500 und 15'500 mg/l. Der pH-Wert des Abwassers wurde mit Schwefelsäure von 6,2 auf 3,3 eingestellt.

Während des Versuches wurde das Abwasser über die Zulaufleitung 2 kontinuierlich in den Abwasserkreislauf geleitet. Die Qualität des behandelten Wassers wurde durch Bemusterung des über den Ablauf 7a abfliessenden Wassers beurteilt. Während insgesamt elf Tagen wurde die Anlage 1 statt mit Abwasser mit einer Lösung von 1 g/l Fe²⁺ (als FeSO₄ in verdünnter Schwefelsäure) als Zulauf betrieben, und dies bei einer hydraulischen Verweilzeit von etwa zwölf Stunden.

Die mittlere DOC-Raumbelastung über die ganze Versuchsdauer lag bei 5,8 Gramm pro Liter Katalysator und Tag (g/l·d), die mittlere DOC-Elimination bei 1,8 g/l·d oder bei 26%. Für die Ermittlung der mittleren DOC-Elimination wurden die Perioden mit FeSO₄-Lösung als Zulauf (mehr DOC im Ablauf als im Zulauf) eingerechnet. Nach verschiedenen Versuchszeiten (28, 91, 93, 98, 105 Tage) wurde das behandelte Abwasser einem statischen Abbautest (Zahn-Wellens-Test, OECD 302 B) unterworfen, wobei parallel eine Probe von unbehandeltem Abwasser geprüft wurde. Mit vorbehandeltem Abwasser wurde eine mittlere Abbaubarkeit (DOC-Elimination) von 94,7% erreicht. Die mittlere Abbaubarkeit des unbehandelten Abwassers lag bei 88,0%.

### Beispiel 2

Es wurde mit einem Gemisch von fünf Abwässern aus der Produktion von Farbstoff-Zwischenprodukten gearbeitet. Das Abwassergemisch wurde mit Aktivkohle als Katalysator bei Temperaturen zwischen 85°C und 95°C während insgesamt 74 Versuchstagen behandelt. Die Konzentration an DOC im Zulauf zur Versuchsanlage lag zwischen 9'500 und 10'500 mg/l.

Während 22 Versuchstagen wurde beim pH-Wert des Abwassers (etwa 11) gearbeitet, während 14 Versuchstagen mit Abwasser, welches mit Schwefelsäure auf einen pH-Wert von 3,3 eingestellt wurde. Während 33 Versuchstagen wurde beim pH-Wert des Abwassers im Zulauf gearbeitet und periodisch (alle zwei bis vier Tage) das pH des Kreislaufs mit Schwefelsäure auf pH <2 gestellt. Die mittlere DOC-Raumbelastung über die ganze Versuchsdauer lag bei 13,2 g/l·d, die mittlere DOC-Elimination bei 3,2 g/l·d oder bei 23%. Abbautests nach 16, 33, 39, 46, 61 und 74 Tagen ergaben eine mittlere Abbaubarkeit von 92,0 % gegenüber 79.0 % für das unbehandelte Abwasser. Eine durch adsorptive Effekte bedingte erhöhte DOC-Elimination war in diesem Versuch während den ersten 15 Tagen zu beobachten. Bis zu diesem Zeitpunkt waren etwa 200 Gramm DOC pro Kilogramm Katalysator eliminiert worden. Dies entspricht der maximalen Beladung, wie sie durch Aufnehmen einer Adsorptionsisotherme bei 85° C ermittelt wurde. Während der weiteren Versuchszeit blieb die DOC-Elimination im Wesentlichen konstant. Am Ende des Versuches waren 520 Gramm DOC pro Kilogramm Katalysator eliminiert worden.

### Beispiel 3

Es wurde mit dem Abwasser aus dem Aufschluss von Holz nach dem Calcium-Bisulfit Verfahren gearbeitet. Das Abwasser wurde während einer Versuchszeit von 20 Tagen bei einer Temperatur von 85 - 95°C mit γ-Aluminiumoxid als Katalysator behandelt. Die DOC-Konzentration des Abwassers betrug 3'400 mg/l. Das pH des Abwassers wurde mit Schwefelsäure auf 5 - 6 eingestellt.

Während fünf Tagen wurde dem Abwasser 0,5 g/l Fe²⁺ als FeSO₄ zugegeben, während drei Tagen 0,5 g/l Mn²⁺ als MnSO₄ und 0,1 g/l Fe²⁺ als FeSO₄. Die mittlere DOC-Raumbelastung über die ganze Versuchsdauer lag bei 10,2 g/l·d, die mittlere DOC-Elimination bei 2,0 g/l·d oder bei 19%. Abbautests nach 6, 8, 13, 17 und 20 Tagen ergaben eine mittlere Abbaubarkeit von 54,2% gegenüber 47,4% für das unbehandelte Abwasser.

### Beispiel 4

Es wurde mit einem gemischten Abwasser aus der Herstellung von Textilfarbstoffen gearbeitet. Das Abwassergemisch wurde dabei bei 80°C mit Aktivkohle als Katalysator behandelt, und zwar über eine Versuchszeit von 17 Tagen. Die DOC-Konzentration des Abwassers betrug 9,88 g/l und der spektrale Adsorptionskoeffizient bei 525 nm 155 cm⁻¹.

Während der gesamten Versuchszeit von 17 Tagen wurde das zu behandelnde Abwasser durch den Reaktor 22 der Figur 1 geleitet, in diesem einem kontinuierlichen, elektrischen Gleichstrom ausgesetzt sowie mit Luft begast, wobei das Abgas über den Kühler 32 der Anlage 21 abgeführt wurde. Der Reaktor 22 wurde halb-kontinuierlich, d.h. im sogenannten "sequential-batch-Betrieb" gefahren. Das zu behandelnde Abwasser wurde dabei chargenweise über eine zeitgesteuerte Pumpe 33 dem "Slurry" 23 aus Katalysator-Pulver und bereits vorgelegtem Abwasser zugeführt. Zur Abtrennung des Katalysators vom Abwasser wurde die Zulaufpumpe 33 und das Rührwerk 25 für 30 Minuten ausser Betrieb gesetzt und dann während einigen Minuten der Abwasser-Überstand mit einer Ablaufpumpe 34 abgepumpt. Für einen nächsten Behandlungszyklus wurde anschliessend über die Pumpe 33 eine weitere Abwassercharge dem "Slurry" 23 zugeführt.

Es wurde beim pH-Wert des Abwassers gearbeitet (5,5). Zweimal wöchentlich wurde der Inhalt des Reaktors mit Schwefelsäure auf pH < 4 gestellt. Die mittlere DOC-Raumbelastung über die gesamte Versuchszeit lag bei 11,5 g/l·d, die Spannung bei 2 V und die Stromstärke bei 100 mA. Zwischen Tag 11 und Tag 17 lag die mittlere DOC-Elimination bei 10.0 % und die mittlere Entfärbung (525 nm) bei 74,0 %. Ein Abbautest mit dem Ablauf des 17. Tages ergab eine Abbaubarkeit von 36.2 % gegenüber 18.8 % für das unbehandelte Wasser.

Es sei abschliessend noch darauf hingewiesen, dass das vorstehend anhand der Beispiele 1 bis 4 beschriebene Verfahren und die zur Durchführung des Verfahrens dienenden Anlagen nur eine Auswahl von mehreren möglichen Ausführungsformen der Erfindung darstellen und in verschiedener Hinsicht geändert werden können.

So kann anstelle von Aktivkohle nicht nur γ-Aluminiumoxid, sondern auch Kohle, Koks, Aktivkoks, Kieselgel, Kieselgur, mindestens ein Aluminiumsilikat, Bentonit, Vermiculit, mindestens ein natürlicher oder künstlicher Zeolit, Kaolin, Titanoxid, Eisenoxid, Manganoxid oder Zinkoxid als Katalysator verwendet werden. Zu den Metalloxiden sei hierzu erwähnt, dass zum Beispiel die Oxide von Eisen und Mangan in Anwesenheit von mindestens einem der vorstehend ebenfalls aufgeführten Katalysatorstoffen durch Oxidation aus Eisen- und/oder Mangan-haltigem Wasser oder Abwasser ausgefällt werden können und dadurch ihre katalytische Aktivität erlangen.

Insbesondere die Stoffe aus der Gruppe bestehend aus γ-Aluminiumoxid, Kieselgel, Kieselgur, Aluminiumsilikat, Bentonit, Vermiculit, Zeolit, Kaolin, Titanoxid, Eisenoxid, Manganoxid können alleine, als Gemisch mit mindestens einem anderen Stoff derselben Gruppe und/oder als Gemisch mit Aktivkohle, Aktivkoks, Kohle oder Koks eingesetzt werden.

Ferner besteht auch noch die Möglichkeit, die Behandlung des Abwassers anstelle von Sauerstoff oder Luft in Gegenwart von Wasserstoffperoxid, oder statt bei Temperaturen von 40° bis 100° bei Temperaturen unter 40°C durchzuführen. Selbstverständlich ist es auch möglich, bei entsprechend modifizierter Anlage, die erfindungsgemässe Abwasserbehandlung bei Temperaturen über 100°C, so zum Beispiel bei 100°C bis 150°C, durchzuführen.

Die zusätzliche elektrische Behandlung des Abwassers kann nicht nur mit Gleichstrom, sondern auch mit Wechselstrom oder mit gepulstem Gleich- oder Wechselstrom erfolgen, wobei abhängig vom zu behandelnden Abwasser Spannungen bis 1000 V möglich sind. Selbstverständlich können auch Spannungen kleiner als 2 V gewählt werden und es kann die elektrische Behandlung für nur einen Teil der gesamten Vorbehandlungszeit erfolgen. Durch geeignete Anordnung der Elektroden in einem Katalysator-Festbett kann schliesslich der Katalysator selbst als Kathode oder als Anode dienen.

## Patentansprüche

1. Verfahren zur Vorbehandlung von in eine Abwasserreinigungsanlage zu leitendem Abwasser, dadurch gekennzeichnet, dass das Abwasser mit einem festen Katalysator behandelt wird.

2. Verfahren nach Anspruch 1, dadurch gekennzeichnet, dass die Behandlung bei einer Temperatur von 40°C bis 100°C erfolgt.

3. Verfahren nach einem der Ansprüche 1 oder 2, dadurch gekennzeichnet, dass ein Katalysator mit einer spezifischen Oberfläche von mehr als 0,5 m²/g verwendet wird.

4. Verfahren nach einem der Ansprüche 1 bis 3, dadurch gekennzeichnet, dass als Katalysator Kohle, Koks, Aktivkohle oder Aktivkoks verwendet wird.

5. Verfahren nach einem der Ansprüche 1 bis 3, dadurch gekennzeichnet, dass der Katalysator aus mindestens einem Stoff der Gruppe bestehend aus Kieselgel, Kieselgur, Aluminiumsilikat, Bentonit, Vermiculit, Zeolit, Kaolin gebildet wird und allein oder als Gemisch mit einem Katalysator gemäss Anspruch 4 verwendet wird.

6. Verfahren nach einem der Ansprüche 1 bis 3, dadurch gekennzeichnet, dass als Katalysator γ-Aluminiumoxid und/oder Titanoxid allein oder als Gemisch mit einem Katalysator gemäss den Ansprüchen 4 und 5 verwendet wird.

7. Verfahren nach einem der Ansprüche 1 bis 3, dadurch gekennzeichnet, dass als Katalysator Eisen-, und/oder Mangan- und/oder Zinkoxid allein oder als Gemisch mit einem Katalysator gemäss den Ansprüchen 4 bis 6 verwendet wird.

8. Verfahren nach einem der Ansprüche 1 bis 7, dadurch gekennzeichnet, dass die Behandlung in Anwesenheit von Luft, Sauerstoff oder Wasserstoffperoxid erfolgt.

9. Verfahren nach einem der Ansprüche 1 bis 8, dadurch gekennzeichnet, dass das Abwasser zusätzlich mit elektrischem Gleich- oder Wechselstrom behandelt wird.

10. Verfahren nach Anspruch 9, dadurch gekennzeichnet, dass bei Spannungen von bis zu 1000 Volt gearbeitet wird.
